(19) Europäisches Patentamt
European Patent Office
Office européen des brevets

(11) **EP 2 482 673 B1**

(12) **EUROPEAN PATENT SPECIFICATION**

(45) Date of publication and mention
of the grant of the patent:
**18.12.2013 Bulletin 2013/51**

(21) Application number: **10760667.5**

(22) Date of filing: **28.09.2010**

(51) Int Cl.:
*A23L 1/03* (2006.01)  *A23L 1/305* (2006.01)
*A23L 1/39* (2006.01)  *A23L 1/40* (2006.01)
*A23L 2/52* (2006.01)

(86) International application number:
**PCT/EP2010/064364**

(87) International publication number:
**WO 2011/039188 (07.04.2011 Gazette 2011/14)**

(54) **PRODUCT COMPRISING HYDROPHOBIN**

PRODUKT ENTHALTEND HYDROPHOBIN

PRODUIT COMPRENANT DE L'HYDROPHOBINE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **02.10.2009 EP 09172092**

(43) Date of publication of application:
**08.08.2012 Bulletin 2012/32**

(73) Proprietors:
• **Unilever PLC**
**London EC4Y 0DY (GB)**
Designated Contracting States:
**CY GB IE MT**
• **Unilever NV**
**3013 AL Rotterdam (NL)**
Designated Contracting States:
**AL AT BE BG CH CZ DE DK EE ES FI FR GR HR
HU IS IT LI LT LU LV MC MK NL NO PL PT RO SE
SI SK SM TR**

(72) Inventors:
• **MITCHELL, John, Turner**
**Bedford Bedfordshire MK44 1LQ (GB)**
• **WIX, Loyd**
**Bedford Bedfordshire MK44 1LQ (GB)**

(74) Representative: **Hugot, Alain**
**Unilever Patent Group**
**Colworth House**
**Sharnbrook, Bedford, MK44 1LQ (GB)**

(56) References cited:
**EP-A1- 1 074 181     EP-A1- 1 623 631
EP-A1- 1 938 697     EP-A1- 2 052 628
WO-A1-96/41882       WO-A1-2007/039065
US-A1- 2007 071 866**

• **KINDERLERER J L: "Chrysosporium species,
potential spoilage organisms of chocolate"
JOURNAL OF APPLIED MICROBIOLOGY, vol. 83,
no. 6, December 1997 (1997-12), pages 771-778,
XP002584536 ISSN: 1364-5072**
• **Salmudin SY: "Low-Fat Chocolate Spread Based
on Palm Oil" 26 May 2010 (2010-05-26),
XP002584223 Retrieved from the Internet: URL:
http://palmoilis.mpob.gov.my/publicati
ons/pod45-salmi.pdf [retrieved on 2010-05-26]**
• **SCOTT V N ET AL: "INFLUENCE OF
TEMPERATURE ON THE MEASUREMENT OF
WATER ACTIVITY OF FOOD AND SALT
SYSTEMS" JOURNAL OF FOOD SCIENCE, vol.
48, no. 2, 1983, pages 552-554, XP002584537
ISSN: 0022-1147**

EP 2 482 673 B1

**Description**

**Technical Field of the Invention**

The present invention is directed to products that provide aeration. In particular, the present invention is directed to products that provide aeration at the point of use and with enhanced stability of the air phase generated.

**Background to the Invention**

Many consumer goods are aerated, that is, gas has been incorporated into a product to form a foam. Products such as mousses, soups, sauces, cappuccinos, milkshakes, and fillings are all characterised by the presence of air cells that are either homogeneously distributed throughout the product or that reside in a discrete zone of the product (e.g. the froth of a cappuccino). The incorporation of air into these products has many advantages including the provision of enhanced rheological properties, organoleptic characteristics demanded by the consumer, unique mouth-feel, manipulation of product texture, and density and volume control. Furthermore, because air occupies volume in products, the amount of ingredients necessary can be reduced, leading to health benefits through the reduction of, for example, fat and calorie content. There are many different techniques for the incorporation of air into products and these can be used either during the manufacturing process or by the consumer. Such techniques include mechanical means (e.g. whipping, whisking, shaking), gas injection (e.g. steam, air), boiling (to create water vapour within the product) and others known in the art. However, these techniques are all inconvenient and dependant on the use of equipment such as whisks, injectors, and cookers. Furthermore, the air incorporated into products through these means is transient, i.e. the foam can be difficult to form and even when formed does not last for the life-span of the product. Thus, there remains a need for products that can be conveniently aerated with an air phase that is stable.

**Tests and Definitions**

With the exception of overrun, all percentages, unless otherwise stated, refer to the percentage by weight.

Aeration

The term aeration means that gas has been incorporated into a product to form a foam. The gas can be any gas but is preferably, particularly in the context of food products, a food-grade gas such as air, nitrogen or carbon dioxide. The extent of the aeration can be measured in terms of the volume of the aerated product. The stability of the aeration can be assessed by monitoring the volume of the aerated product over time.

Overrun

The extent of aeration is typically defined in terms of "overrun". In the context of the present invention, %overrun is defined in volume terms as:

$$\text{Overrun}(\%) = \frac{(\text{volume of the final aerated product} - \text{volume of unaerated mix})}{\text{volume of unaerated mix}} \times 100$$

The amount of overrun present in the product will vary depending on the desired product characteristics. For example, the level of overrun in confectionery such as mousses can be as high as 200 to 250%. The level of overrun in some chilled products, ambient products and hot products can be lower, but generally over 10%, e.g. the level of overrun in milkshakes is typically from 10 to 40%.

Water Activity

The water activity of a composition is defined using the following formula:

$$\text{Water activity} = \frac{\text{Vapour pressure of water in the composition}}{\text{Vapour pressure of pure water at the same temperature}}$$

Measurement of Water Activity

Water activity is determined using direct measurement, that is to say, measurement of water activity herein is performed using an Aqualab 4TE water activity meter (Decagon Devices Inc., Pullman, WA, USA 99163), used according to the manufacturer's instructions.

Hydrophobin

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xn-C-X5-9-C-C-X11-39-C-X8-23-C-X5-9-C-C-X6-18-C-Xm (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

Xn-C-X 1-50-C-X0-5-C-X1-100-C-X1-100-C-X1-50-C-X0-5-C-X1-50-C-Xm (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).
The formation of a film can be established by incubating a Teflon sheet in the protein solution followed by at least three washes with water or buffer (Wosten et al., 1994, Embo. J. 13: 5848-54). The protein film can be visualised by any suitable method, such as labelling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.
Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.
Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.
The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol 65: 5431-5435).
Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade -'generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

EP 2 052 628 and US 2007/0071866 disclose aerated products that comprise hydrophobin.

Acidulant

Acidulants are compositions that are able to lower pH and may be in the form of free acid (e.g. acids including citric acid, tartaric acid, malic acid, phosphoric acid, or mixtures thereof). Such free-acid acidulants are suitable for use with products that already have an acidic taste such as vegetable-based soups, fruit drinks and so on. Alternatively the acidulant may be in the form of a salt of an acid that hydrolyses to provide free acid (e.g. cream of tartar, sodium tartrate, potassium tartrate, glucono delta-lactone, and mixtures thereof). These salt-based acidulants are suitable for use with products that do not have an acidic taste, for example sauces, coffee, milkshakes. The acidulant may be added to the product of the invention. Alternatively, the acidulant may be added at the point of use.

**Brief Description of the Invention**

We have now found that products can be conveniently aerated through the use of bicarbonate and that furthermore the air phase generated can be stabilised through the use of hydrophobin. Accordingly, the present invention provides a product comprising hydrophobin, and at least 0.5 wt% of bicarbonate, wherein the water activity of the product is at most 0.5.

Preferably the amount of hydrophobin in the product is at least 0.005 wt%, more preferably at least 0.01 wt%, more preferably still at least 0.025 wt%, yet more preferably still at least 0.05 wt%. Preferably the amount of hydrophobin in the product is at most 5 wt%, more preferably at most 2.5 wt%, most preferably at most 1 wt%.

The aeration provided by the product is dependant on the amount of gas released from the bicarbonate and therefore the product preferably contains at least 1.0 wt%, more preferably at least 2.5 wt%, and most preferably at least 5 wt% of bicarbonate. Preferably the product contains at most 25 wt%, more preferably at most 15 wt% and more preferably still at most 10 wt% of bicarbonate.

The product is intended to provide aeration at the point of use and therefore it is necessary to ensure bicarbonate does not decompose prior to use. Accordingly, the water activity of the product is at most 0.5, preferably at most 0.4, more preferably at most 0.3, more preferably still at most 0.2. Preferably, the water activity of the product at least 0.01, more preferably at least 0.05, more preferably still at least 0.1. Due to the low water activity the product may be provided in a free-flowing powder form that will not clump or cake during manufacture or storage. It will be appreciated that the product may be in forms other than powder such as tablets, granules, and other forms known to the person skilled in the art. In addition, the product may be mixed with a liquid with a low water activity (e.g. a pure oil) to form a paste.

Preferably the bicarbonate is sodium bicarbonate or potassium bicarbonate or a mixture thereof. In a preferred embodiment the bicarbonate is ammonium bicarbonate.

The rate of decomposition of the bicarbonate may be enhanced in acidic conditions, therefore the product preferably contains an acidulant. The amount of acidulant needed depends on the extent to which the bicarbonate requires acidic conditions to enhance the rate of decomposition and therefore the weight ratio of bicarbonate to acidulant is preferably at least 0.2, more preferably at least 0.3, and more preferably still at least 0.5. Preferably the weight ratio of bicarbonate to acidulant is at most 5, more preferably at most 2.5, and more preferably still at most 1.5. Alternatively, an acidulant may be added at the point of use.

Preferably the weight ratio of hydrophobin to bicarbonate is at least 0.005, more preferably at least 0.010, more preferably still at least 0.025. Preferably the weight ratio of hydrophobin to bicarbonate is at most 0.5.

Products according to the invention are particularly suitable for use in food applications wherein a measure of the product may be added to already prepared foodstuffs such as soups, drinks, sauces and so on to aerate such foodstuffs. Alternatively the products according to the invention may include dry foodstuff ingredients such as soup powder, sauce powder, coffee granules, cappuccino powder, and milkshake powder such that the bicarbonate decomposes at the point of use to aerate the product, the resulting foam being stabilised by the hydrophobin.

As discussed above, the water activity of the product is low in order to ensure that the product remains stable and in a form that is acceptable to consumers. Accordingly, the product may be sealed in an air-tight and water-tight environment (i.e. hermetically sealed) to ensure that low water activity is maintained between manufacture and use. Such packaging processes and materials are widely used in industry (e.g. soup powder manufacture) and are known to the person skilled in the art. In a first preferred embodiment, the product is packaged in the form of multiple doses (e.g. sufficient product is contained in a single package to be used on different occasions). In a second preferred embodiment, the product is provided in individual doses (for example in individual sachets, blister-packs, hermetically sealed tablets and so on).

**Detailed description of the invention**

**Examples**

The water activity of the dry ingredients of the examples herein below is less than 0.3.

A dry blend of hydrophobin and bicarbonate was mixed with dry foodstuffs and the amount of aeration and stability of the aeration was assessed. The extent of aeration was determined by measuring the overrun of the product. The stability of the aeration was assessed by monitoring the overrun of the aerated product over a period of time. In these examples this time period is the approximate "life-span" of the product, i.e. the typical duration between preparation and consumption.

Example 1 - Soup

| Dry ingredients | Supplier | wt % |
|---|---|---|
| Tomato and pepper soup powder | Knorr | **70.9** |
| Sodium bicarbonate | Sigma | **14.2** |
| Glucono delta-lactone | Sigma | **14.2** |
| Hydrophobin | VTT | **0.7** |

The dry ingredients were placed in a plastic pot. 50ml of water at 20°C was added to the ingredients and the resultant mix was heated to 70°C. The initial volume was measured without agitation when the soup had reached 70°C and the overrun was 220%. The pot was left at 70°C for 20 minutes at which point the overrun was 60%.

Example 2 - Cappuccino

| Dry ingredients | Supplier | wt % |
|---|---|---|
| "Options" cappuccino powder | Ovaltine | **76.5** |
| Sodium bicarbonate | Sigma | **7.7** |

(continued)

| Dry ingredients | Supplier | wt % |
|---|---|---|
| Glucono delta-lactone | Sigma | 15.3 |
| Hydrophobin | VTT | 0.5 |

The dry ingredients were placed in a falcon tube. 5ml of water at 20°C was added and the mix was heated to 70°C. The initial volume was measured when the drink had reached 70°C and the overrun was 200%. The pot was left at 70°C for 15 minutes after which the tube was inverted to re-suspend the foam. The overrun at this point was 130%.

Example 3 - Low fat milk shake

| Dry ingredients | Supplier | wt % |
|---|---|---|
| Slim-Fast powder | Unilever | 77.4 |
| Potassium bicarbonate | Sigma | 7.8 |
| Potassium hydrogen tartrate | Sigma | 14.0 |
| Hydrophobin | VTT | 0.8 |

The dry ingredients were placed in a plastic pot. 50ml of cold semi skimmed milk was added and the resultant mix was shaken vigorously for 20 seconds. The initial overrun was 220% and after 10 minutes the overrun was 20%.

Example 4 - Hollandaise sauce

| Dry Ingredients | Supplier | wt % |
|---|---|---|
| Coleman's hollandaise sauce | Coleman's | 70.9 |
| Sodium bicarbonate | Sigma | 14.2 |
| Glucono delta-lactone | Sigma | 14.2 |
| Hydrophobin | VTT | 0.7 |

The dry ingredients were placed in a plastic pot. 50ml of cold semi skimmed milk was added, the mix was shaken vigorously for 20 seconds. 2.5g of melted butter was added and the resultant mix was heated to 70°C. The initial overrun was 185% and the overrun of the sauce after 15 minutes was 90%.

Example 5 - Lemon tea

| Dry Ingredients | Supplier | wt % |
|---|---|---|
| Green tea powder | Ceytea | 12.7 |
| Lemon flavouring | Firmenich | 1.3 |
| Fructose | Tate & Lyle | 25.5 |
| Potassium bicarbonate | Sigma | 31.8 |
| Citric acid | Sigma | 25.5 |
| Hydrophobin | VTT | 3.2 |

The dry ingredients were placed in a falcon tube. 5ml of water at 20°C was added and the resultant mix was heated to 70°C. Aeration commenced immediately after the addition of water and the overrun was 180%. After 15 minutes the overrun was 80%.

Examples 1 to 5 demonstrate that the product according to the invention is capable of generating a stable foam in a convenient and reproducible manner across a variety of different product types.

Example 6

The aim if this example is to prepare comparative examples with foam samples containing either hydrophobin or Hygel as the foam stabilizing agent and to measure benefits of hydrophobin foams.

Method

For each of the compositions below the dry ingredients were placed in a Falcon tube, 5 ml of water (70 °C) was added and the tube shaken vigorously. The tube was placed in a water bath at 70 °C and the maximum volume measured. The foam was then left in the water bath for 20 min (soup) or 15 min (hot chocolate, milk shake, Hollandaise) after which the tube was inverted to resuspend the foam and the overrun measured.

Samples Prepared

Soup - to make 5 ml

| Dry ingredients | Supplier | wt % | weight / g |
|---|---|---|---|
| Cream of mushroom soup powder | Knorr | 70.9 | 0.5 |
| Sodium bicarbonate | Sigma | 14.2 | 0.1 |
| Glucono delta-lactone | Sigma | 14.2 | 0.1 |
| Hydrophobin | VTT | 0.7 | 0.0049 |

| Dry ingredients | Supplier | wt % | weight / g |
|---|---|---|---|
| Cream of mushroom soup powder | Knorr | 66.7 | 0.5 |
| Sodium bicarbonate | Sigma | 13.3 | 0.1 |
| Glucono delta-lactone | Sigma | 13.3 | 0.1 |
| Hygel | Kerry | 6.7 | 0.05 |

Hot Chocolate drink - to make 5 ml

| Dry ingredients | Supplier | wt % | weight / g |
|---|---|---|---|
| "Options" Belgian choc powder | Ovaltine | 76.5 | 0.5 |
| Sodium bicarbonate | Sigma | 7.7 | 0.05 |
| Glucono delta-lactone | Sigma | 15.3 | 0.1 |
| Hydrophobin | VTT | 0.5 | 0.0033 |

| Dry ingredients | Supplier | wt % | weight / g |
|---|---|---|---|
| "Options" Belgian choc powder | Ovaltine | 71.4 % | 0.5 |
| Sodium bicarbonate | Sigma | 7.1 % | 0.05 |
| Glucono delta-lactone | Sigma | 14.3 % | 0.1 |
| Hygel | Kerry | 7.1% | 0.05 |

Low fat milk shake - to make 5 ml

| Dry ingredients | Supplier | wt % | weight / g |
|---|---|---|---|
| Chocolate Slim-Fast powder | Unilever | 77.4 | 0.5 |
| Potassium bicarbonate | Sigma | 7.8 | 0.05 |
| Potassium hydrogen tartrate | Sigma | 14.0 | 0.09 |
| Hydrophobin | VTT | 0.8 | 0.0052 |

| Dry ingredients | Supplier | wt % | weight / g |
|---|---|---|---|
| Chocolate Slim-Fast powder | Unilever | 72.5 | 0.5 |
| Potassium bicarbonate | Sigma | 7.2 | 0.05 |
| Potassium hydrogen tartrate | Sigma | 12.9 | 0.09 |
| Hygel | Kerry | 7.2 | 0.05 |

Hollandaise Sauce - to make 5 ml

| Dry Ingredients | Supplier | wt % | weight / g |
|---|---|---|---|
| Coleman's hollandaise sauce | Coleman's | 70.9 | 0.677 |
| Sodium bicarbonate | Sigma | 14.2 | 0.136 |
| Glucono delta-lactone | Sigma | 14.2 | 0.136 |
| Hydrophobin | VTT | 0.7 | 0.0067 |

| Dry Ingredients | Supplier | wt % | weight / g |
|---|---|---|---|
| Coleman's hollandaise sauce | Coleman's | 67.8 | 0.677 |
| Sodium bicarbonate | Sigma | 13.9 | 0.136 |
| Glucono delta-lactone | Sigma | 13.9 | 0.136 |
| Hygel | Kerry | 5 | 0.05 |

Results

| Sample | Initial sample overrun | | Final sample volume & comments | |
|---|---|---|---|---|
| | *Hydrophobin* | *Hygel* | *Hydrophobin* | *Hygel* |
| Soup | 200% | 180 % | 110%. Fine foam at bottom, coarser foam on top | 20 %. Coarse bubbles remaining |
| Hot chocolate | 180 % | 170 % | 140 % Sample looks thick. Fine creamy foam | 30 %. Coarse bubbles |
| Milk shake | 120 % | 80% | 90 %. Stable fine foamy head | 25 %. Small amount of fairly fine foam |
| Hollandaise sauce | 200 % | 200% | 200 %. Very stable, fine creamy looking foam | 110 %. Fairly coarse foam. |

Samples containing hydrophobin produced a finer, more stable foam. They gave the appearance of a stable creamy foam or a creamy head.

Foam Rheology

The rheology of the foam generated in the hollandaise sauce was measured using 2 oscillatory methods i) strain sweep from 0.1 to 1000 % at 1 Hz was used and ii) a time sweep was carried out at 0.1 % strain at 1 Hz. The tables below shows the amounts of dry ingredients used. The methods are given in more detail below.

Hollandaise Sauce - to make 15 ml

| Dry Ingredients | Supplier | wt % | weight / g |
|---|---|---|---|
| Coleman's hollandaise sauce | Coleman's | 70.9 | 2.031 |
| Sodium bicarbonate | Sigma | 14.2 | 0.408 |
| Glucono delta-lactone | Sigma | 14.2 | 0.408 |
| Hydrophobin | VTT | 0.7 | 0.0201 |

| Dry Ingredients | Supplier | wt % | weight / g |
|---|---|---|---|
| Coleman's hollandaise sauce | Coleman's | 67.8 | 2.031 |
| Sodium bicarbonate | Sigma | 13.9 | 0.408 |
| Glucono delta-lactone | Sigma | 13.9 | 0.408 |
| Hygel | Kerry | 5 | 0.15 |

Method 1

Dry ingredients were weighed and put into a 60 ml Sterilin pot. 15ml of water (70 °C) was added and the sample shaken vigorously for 20 seconds. The sample was transferred to a serrated cup in a Physica rheometer and held at 70 °C, causing foam to form. The vane was moved to the top of the sample, and then moved very slowly (100 $\mu$m min$^{-1}$) into the foam to cause as little disturbance to it as possible. A oscillatory strain sweep (0.1 - 1000 %) using a log ramp with 6 points per decade, 15 seconds per point was carried out at 1 Hz.

The average value of G' between 0.1 and 1 % strain was calculated and compared.

Method 2

Dry ingredients were weighed and put into a 60 ml Sterilin pot. 15 ml of water (70 °C) was added and the sample shaken vigorously for 20 seconds. The sample was transferred to a serrated cup in a Physica rheometer and held at 70 °C, causing foam to form. The vane was moved to give a 25 mm gap, as the foam formed it covered the vane. Once the vane was covered an oscillatory time sweep at 0.1 % strain, 1 Hz was carried out over 15 minutes.
The average of G' around the maximum (from 100 - 150 secs) before foam collapse was calculated.

Results

|  | Method 1 G' 0.1 - 1 % strain | Method 2 G' max |
|---|---|---|
| Hollandaise + hygel | 23.2 | 22 |
| Hollandaise + hydrophobin | 251 | 383 |

Conclusion

The foam stabilised by the hydrophobin has a higher elastic modulus than that stabilised with Hygel.
The various features and embodiments of the present invention, referred to in individual sections above apply, as appropriate, to other sections, mutatis mutandis. Consequently features specified in one section may be combined with features specified in other sections, as appropriate. Although the invention has been described in connection with specific preferred embodiments, it should be understood that the invention as claimed should not be unduly limited to such specific embodiments.

**Claims**

1.  A product comprising hydrophobin, and at least 0.5 wt% of bicarbonate, wherein the water activity of the product is at most 0.5.

2.  A product according to claim 1 wherein the bicarbonate is sodium bicarbonate or potassium bicarbonate or a mixture thereof.

3.  A product according to claim 1 wherein the bicarbonate is ammonium bicarbonate.

4.  A product according to any of the preceding claims wherein the water activity of the product is at most 0.3.

5.  A product according to any of the preceding claims wherein the product comprises an acidulant.

6.  A product according to any of the preceding claims wherein the weight ratio of bicarbonate to acidulant is from 0.2 to 5.

7.  A product according to any of the preceding claims wherein the weight ratio of hydrophobin to bicarbonate is at least 0.005.

8.  A product according to any of the preceding claims wherein the product is a food product.

9.  A product according to any of the preceding claims wherein the product is provided in a hermetically sealed package.

10. A product according to claim 9 wherein the packaged product provides multiple servings.

11. A product according to claim 9 wherein the packaged product provides an individual serving.

**Patentansprüche**

1. Produkt umfassend Hydrophobin, und mindestens 0,5 Gew.-% an Bicarbonat, wobei die Wasseraktivität des Produkts höchstens 0,5 ist.

2. Produkt nach Anspruch 1, wobei das Bicarbonat Natriumbicarbonat oder Kaliumbicarbonat oder eine Mischung davon ist.

3. Produkt nach Anspruch 1, wobei das Bicarbonat Ammoniumbicarbonat ist.

4. Produkt nach einem der vorangehenden Ansprüche, wobei die Wasseraktivität des Produkts höchstens 0,3 ist.

5. Produkt nach einem der vorangehenden Ansprüche, wobei das Produkt ein Ansäuerungsmittel umfasst.

6. Produkt nach einem der vorangehenden Ansprüche, wobei das Gewichtsverhältnis von Bicarbonat zu Ansäuerungsmittel 0,2 bis 5 ist.

7. Produkt nach einem der vorangehenden Ansprüche, wobei das Gewichtsverhältnis von Hydrophobin zu Bicarbonat wenigstens 0,005 ist.

8. Produkt nach einem der vorangehenden Ansprüche, wobei das Produkt ein Nahrungsmittel ist.

9. Produkt nach einem der vorangehenden Ansprüche, wobei das Produkt in einer Verpackung unter Luftabschluss bereitgestellt wird.

10. Produkt nach Anspruch 9, wobei das verpackte Produkt mehrere Zubereitungen bietet.

11. Produkt nach Anspruch 9, wobei das verpackte Produkt eine Einzelzubereitung bietet.

**Revendications**

1. Produit comprenant de l'hydrophobine, et au moins 0,5 % en poids de bicarbonate, dans lequel l'activité de l'eau du produit est au plus de 0,5.

2. Produit selon la revendication 1, dans lequel le bicarbonate est le bicarbonate de sodium ou le bicarbonate de potassium ou un mélange de ceux-ci.

3. Produit selon la revendication 1, dans lequel le bicarbonate est le bicarbonate d'ammonium.

4. Produit selon l'une quelconque des revendications précédentes, dans lequel l'activité de l'eau du produit est au plus de 0,3.

5. Produit selon l'une quelconque des revendications précédentes, où le produit comprend un acidulant.

6. Produit selon l'une quelconque des revendications précédentes, dans lequel le rapport pondéral du bicarbonate sur l'acidulant est de 0,2 à 5.

7. Produit selon l'une quelconque des revendications précédentes, dans lequel le rapport pondéral de l'hydrophobine sur le bicarbonate est au moins de 0,005.

8. Produit selon l'une quelconque des revendications précédentes, où le produit est un produit alimentaire.

9. Produit selon l'une quelconque des revendications précédentes, où le produit est fourni dans un conditionnement scellé hermétiquement.

10. Produit selon la revendication 9, où le produit conditionné fournit plusieurs portions.

**11.** Produit selon la revendication 9, où le produit conditionné fournit une portion individuelle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0174864 A
- WO 9641882 A
- WO 0157076 A
- EP 2052628 A
- US 20070071866 A

### Non-patent literature cited in the description

- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85